# EUROPEAN PATENT APPLICATION

(11) **EP 0 895 974 A1**
(43) Date of publication of application: **10.02.1999**
(21) Application number: 98250234.6
(22) Date of filing: 24.06.1998
(51) Int. Cl.: C04B 35/645

(54) **Direct coating hot isostatic pressing encapsulation method**

(30) Priority: 04.08.1997 US 905428
(71) Applicant: Lockheed Martin Corporation, Bethesda, MD 20817 (US)
(72) Inventor: Wright, Joseph M., Southlake, TX 76092 (US); Meyers, Joseph F., Grand Prairie, TX 75052 (US)
(74) Representative: UEXKÜLL & STOLBERG

(57) **Abstract**

A new method for the hot isostatic pressing of porous bodies of powdered material such as ceramics or metals is disclosed. Bodies preformed from the powdered materials are coated with a layer of glass frit applied directly to the preformed body in an amount generally ranging from about 0.15 g/cm² to about 0.50 g/cm² of the surface of the preformed body. Single or multiple layers of the glass frit can be applied to the preformed body. In addition, a release coating may be applied to facilitate easy recovery of the final product. In a preferred embodiment, the coated preformed body is placed in a hot isostatic press vessel and the entire vessel evacuated to a vacuum of about 200 milli-Torr. While under vacuum, the temperature is first raised to the temperature at which the frit composition will vitrify, at least in part, and form a hermetic or gas-impermeable seal around the preformed body. After a short hold, the pressure and temperature in the vessel are raised to the final HIP processing parameters for the specific ceramic or metallic powder used.

## Description

### TECHNICAL FIELD OF THE INVENTION

The present invention relates to a method for manufacturing densified objects from powdered materials by hot isostatic pressing. In this method, a body preformed from the powdered material is coated by directly applying a thin layer of glass frit to the preformed body. The glass frit is then vitrified to form a gas impermeable layer around the preformed body after which pressure is applied. Pressing is performed in any pressure furnace in which the necessary temperature and pressure can be maintained.

### BACKGROUND OF THE INVENTION

Hot isostatic pressing ("HIP") employs the simultaneous use of elevated pressure and elevated temperature to effect the densification of partially densified objects which are preformed from powdered materials such as metals or ceramics. Pressing is typically conducted at or near the sintering temperature of the powdered material using a gas such as argon, nitrogen, or helium. Materials subjected to HIP must be impermeable to the pressurizing gas. To the extent that the material to be subjected to HIP is not impermeable to the pressurizing gas, a gas impermeable layer can be provided around the subject material to protect it against penetration by the pressurizing gas. A number of techniques currently east in the prior art for accomplishing this result.

In U.S. Patent No. 3,622,313 ("the '313 patent") there is described a method of manufacturing densified bodies of metallic powders. A glass capsule or container having the same shape as the final finished product is first filled with a metallic powder. The metallic powder filled glass container is then placed in a hot molten salt bath within a pressure furnace and subjected to elevated pressures. Due to the plasticity of the glass at the elevated pressing temperature the powder is subjected to compacting forces, allowing its densification into a shape corresponding to that of the internal wall of the glass container. However, the metallic powder is not compacted or otherwise pre-densified to any significant degree of its theoretical density prior to the application of HIP. Thus, the degree of compaction or shrinkage occurring during hot pressing is of such a magnitude that it is not possible to obtain reproducible results, i.e., the same density in different capsules. Furthermore, the process of the '313 patent renders it very difficult if not impossible to press bodies having irregular and/or complicated shapes. Finally, dimensional control of the part is limited due to large shrinkage, slumping or material creep and the container configuration. The large change in volume also makes it difficult to maintain an impermeable layer throughout the entire HIP process.

In U.S. Patent No. 4,081,272 ("the '272 patent") there is described a method of manufacturing objects at elevated temperatures and elevated pressures by isostatic pressing of pre-formed or pre-pressed powder bodies of the desired shape enclosed in a deformable casing. The preformed powder body is embedded in a mass of glass powder such as quartz. The glass powder in turn is contained within a glass capsule having a lower softening temperature than the glass powder in which the preformed body is embedded. The capsule with the glass powder embedded preformed body is evacuated and sealed after which the capsule is heated and subjected to isostatic pressure. According to the '272 patent, during the first part of the heating, the glass capsule, which surrounds the preformed powder body and the glass powder in which the preformed body is embedded, acts as a gas-tight barrier. As the temperature increases and the capsule begins to melt, the resulting molten glass combines or reacts with the adjacent glass powder to maintain the gas-impermeable barrier. This barrier is further maintained as the temperature reaches the melting point of the glass powder. As the temperature continues to rise, this barrier layer is moved further and further inwardly towards the embedded preformed powder body. Thus, despite the fact that the original capsule of glass, having a low melting point, may melt, a gas-impermeable layer is constantly maintained, preventing the gaseous pressure medium from penetrating into the preformed powder body and thereby permitting it to be compressed to a great density. However, this process involves the use of a large quantity of glass powder as well as the glass capsule, which, after cooling must eventually be removed from the compressed body. In addition, because a large amount of glass powder is required to fill the remaining capsule volume, negative surfaces of the preformed body will be filled with solid glass during processing. This can cause cracking due to differences in the coefficients of thermal expansion ("CTE") and requires the use of complex machinery to remove the glass. Even with such machines, removal of large quantities of glass is difficult and typically results in fractures in the final part due to stresses caused by thermal expansion mismatches.

In U.S. Patent No. 4,568,516 ("the '516 patent") there is described a method of manufacturing objects by hot isostatic pressing of preformed or pre-pressed powder bodies. According to the '516 patent, the preformed body, in which at least the surface layer consists of a ceramic material in the form of a nitride, is provided with a boron-oxide containing casing which is made impenetrable to the pressure medium before the isostatic pressing is carried out. The casing is provided by embedding the preformed body in a mass or pool of boron-oxide containing glass frit or of a material forming glass upon heating contained in an open topped container or crucible and placing the crucible in a high pressure furnace suitable for HIP. Once HIP is completed, the boron-oxide containing casing can be removed by leaching with hot water, by spraying with water vapor or by melting off the majority of the casing and removing the thin film remaining by hot water or water vapor. The method of the '516 patent requires vast amounts of glass frit to sufficiently embed and subsequently encase the preformed body in a gas-impermeable layer during processing and is therefore impractical, particularly for large bodies. This method is also limited in the materials which can be processed in this manner. Because the preformed body rests within the pool or bed of encasing glass frit, preformed bodies made from powdered materials having a low density tend to float to the surface within the encasing glass frit during processing, breaching or preventing the formation of a gas-impermeable layer around the entirety of the preformed body. This method also does not work well with oxide compounds as the boron oxide of the boron oxide containing casing reacts with the oxide in the ceramic. Lastly, the thick "pool" of glass usually has a lower CTE than the ceramic. Thus, the large amount of glass may cause the sample to crack on post HIP cooling.

In U.S. Patent No. 4,717,535 ("the '535 patent") there is described a method similar to that described in the '516 patent. That is, there is described a method of manufacturing an object by hot isostatic pressing of a preformed or pre-pressed powder body. According to the '535 patent, a barrier layer containing powdered boron nitride, which counteracts the penetration of melted glass into the preformed body, is first arranged on the preformed body inside a casing of glass or of a material forming glass upon heating. The casing of glass is then made impermeable to gas by heating after which the isostatic pressing is carried out. According to the '535 patent, the barrier layer is built up of at least two layers containing powdered boron nitride. As in the '516 patent, the gas impermeable casing is provided by embedding the preformed body in a mass or pool of glass particles or frit contained in an open topped container or crucible and then placing the crucible in a high pressure furnace suitable for HIP. Once HIP is completed the casing is removed by unspecified means and the barrier layer removed by steel brushing or blasting. The method of the '535 patent, however, suffers from the same problems associated with the method of the '516 patent - vast amounts of glass frit are needed to embed and encase the preformed body and the inability to process low density materials. This method also does not work well with oxide compounds as the oxide based materials tend to react with boron nitride. Lastly, the thick "pool" of glass usually has a lower CTE than the ceramic. Thus, the large amount of glass may cause the sample to crack on post HIP cooling.

The present invention addresses many of the problems associated with the prior art techniques by providing a HIP method wherein a thin coat or coats of glass frit are applied directly to a preformed body having a release coating which facilitates the removal of the vitrified glass frit upon completion of HIP. The preform is then placed in a HIP vessel and heated to form a gas impermeable layer prior to pressurization. This invention eliminates the need in the prior art for a vitreous container for HIP processing as well as the need in the prior art for a crucible to contain the melt produced from the large volume of glass particles. It also improves cost and yield by significantly reducing the total amount of glass frit used as well as the amount of glass in contact with the final product, which in large amounts can induce failure causing stress. The invention also eliminates the potential for the product to float in the melt, and thus avoids breaching of the hermetic seal. The invention also allows for the easy recovery of the densified product from the encasing layer of gas-impermeable glass.

### SUMMARY OF THE INVENTION

The present invention provides new methods by which hot isostatic pressing of porous bodies of powdered materials, preferably ceramics and/or metals, can be accomplished. According to the methods disclosed herein, a preformed body is painted or otherwise coated with a suitable density of glass frit which is applied directly to the preformed body. Preferably, a density of at least about 0.15 g/cm² to about 0.50 g/cm² is used. The glass frit can be a single constituent composition or a multiple constituent composition and can be applied as a single layer or as multiple layers. In addition, a release coating can be applied to the ceramic or metallic preform prior to the application of the frit to reduce interactions between the preform and the vitrified glass and to provide for easy recovery of the final densified product from the encasing glass.

In a preferred embodiment, the coated preformed body is placed in a hot isostatic press vessel and the entire vessel evacuated. While under vacuum, the temperature is first raised to the temperature at which the frit composition will vitrify, at least in part, and form a hermetic or gas-impermeable seal around the preformed body. After a short hold, the pressure and temperature in the vessel are raised to the final HIP processing parameters for the specific ceramic or metallic powder used. In those cases where multiple layers of glass frit are used, the layers of frit can be arranged such that the outermost layer of glass frit has a lower melting point than the interior layers of glass frit which have increasingly elevated melting points as you move from the outermost layer of glass frit in towards the preformed body on which the glass frit layers have been applied. This configuration of glass frit layers ensures that as the temperature rises and the encasing layers of frit begin to melt away, a gas-impermeable glass layer is constantly maintained further and further in towards the encased, preformed powder body ensuring the presence of a gas-impermeable layer throughout the entire HIP process.

### BRIEF DESCRIPTION OF THE DRAWINGS

Figure 1 shows a schematic view of a preformed ceramic body having applied thereto a thin coating of a reactive glass frit according to the present invention
Figure 2 shows a schematic view of a preformed ceramic body having applied thereto a piece of Astro Quartz® cloth impregnated with Pyrex® frit over which is applied a thin coating of Pyrex® frit according to the present invention.
Figure 3 shows a schematic view of a preformed ceramic body having applied thereto a thin coating of reactive glass frit over which is applied a thin coating of Pyrex® frit according to the present invention.
Figure 4 shows a schematic view of a preformed ceramic body having applied thereto a thin coating of Vycor® frit over which is applied a thin coating of Pyrex® frit according to the present invention.
Figure 5 shows a schematic view of a preformed ceramic body having applied thereto a thin coating of reactive glass frit over which is applied a piece of Astro Quartz® cloth impregnated with Corning 7070 glass frit over which is applied a thin layer of Corning 7070 glass frit according to the present invention.

### DETAILED DESCRIPTION

Reactive glass frit ("RGF") refers to a glass or glass frit formed by combining boron-oxide with a porous high silica borosilicate glass as described, e.g., in U.S. Patent No. 4,093,771 (incorporated herein by reference).

Nitroxyceram refers to a ceramic composition comprising silicon oxynitride (Si₂ON₂), boron nitride (BN) particles, silicon nitrides, and various oxynitrides and silicate materials as described in U.S. Patent No. 5,627,542 (incorporated herein by reference).

Pyrex® glass or glass frit refers to a glass or glass frit containing 80.3% by weight of SiO₂, 12.2% by weight B₂O₃, 2.8% by weight Al₂O₃, 4.0% by weight Na₂O, 0.4% by weight K₂O and 0.3% by weight CaO. It is available commercially from Corning, Inc. (Corning, N.Y.).

Vycor® glass or glass frit refers to a glass or glass-frit containing 96.7% by weight SiO₂, 2.9% by weight B₂O₃ and 6.4% by weight Al₂O₃. It is available commercially from Corning, Inc.

Corning 7070 glass or glass frit refers to a glass or glass-frit containing 70.55% by weight SiO₂, 25.22% by weight B₂O₃, 1.07% by weight Al₂O₃, 0.03% by weight Fe₂O₃, 0.07% by weight CaO, 0.20% by weight MgO, 2.07% by weight Na₂O, 0.41% by weight K₂O and 0.38% by weight As₂O₃. It is available commercially from Corning, Inc.

The hot isostatic pressing method disclosed herein can be used for the densification of any porous preformed body that is currently densified by hot isostatic pressing. Typically, the preformed body is formed from a powdered material, preferably a powdered ceramic or metallic material. Examples of ceramic materials to which the present invention is applicable are: nitrides such as silicone nitride, boron nitride and carbon nitride; oxides such as aluminum oxide, zirconium oxide and yttrium oxide; and carbides such as silicon carbide and boron carbide. Examples of metallic materials to which the present invention is applicable are: titanium and inconnel.

The powdered material is first fashioned into a preformed body having the general shape of the final product by conventional means. For example, the powder can be placed into a capsule made of plastic such as polyurethane or rubber having approximately the same shape as the preformed powder body to be manufactured, after which the capsule is sealed and subjected to compaction at a pressure and for a length of time sufficient to result in a preformed body having a density of about 50% of the final density for ceramics and a density of about 50% of the final density for metals. If necessary, the resulting preformed body can then be machined into the final desired shape.

The preformed body is then coated with one or more thin layers of glass frit. Each layer can be applied, e.g., by brushing, spraying or dipping. In each instance, the glass frit is first mixed with a carrier or diluent such as isopropanol and a binding or thickening agent, e.g., Aquazol (Polymer Chemical Innovations, State College, PA) before its application to the preformed body. In addition, other additives, e.g., the dispersant Amp95 (Angus Chemical Co., Northbrook, IL) may be added.

In those instances where a single layer of glass frit is applied to the preformed body, the glass frit is generally applied in an amount in the range of from about 0.1 g/cm² to about 0.5 g/cm² of the outer surface of the preformed body. Preferably, the glass frit is applied to the preformed body in an amount in the range of from about 0.15 g/cm² to about 0.35 g/cm² of the outer surface of the preformed body and more preferably from about 0.15 g/cm² to about 0.3 g/cm² of the outer surface of the preformed body and allowed to dry, preferably in air at about 100°C for about 10 minutes. Most preferably, RGF is applied as a coating in an amount of about 0.15 g/cm² of the outer surface of the preformed body, Pyrex® frit is applied as a coating in an amount of about 0.20 g/cm² to about 0.35 g/cm² of the outer surface of the preformed body and Vycor® frit is applied as a coating in an amount of about 0.20 g/cm² to about 0.30 g/cm² of the outer surface of the preformed body. In those instances involving the application of multiple layers of glass frit to the preformed body, the inner layers are applied as described above whereas the outermost layer of glass frit is applied in an amount in the range of at least about 0.1 g/cm² to about 0.25 g/cm² of the outer surface of the preformed body and preferably in the range of about 0.15 g/cm² to about 0.2 g/cm² of the outer surface of the preformed body. As with the application of a single layer of glass frit, in those instances where multiple layers of glass frit are applied to the preformed body, each layer is allowed to dry before an additional layer is applied over it. As before, drying is preferably performed in air at about 100°C for about 10 minutes.

The layer of glass frit may also be applied by means of a piece of glass cloth such as Astro Quartz® cloth (J.P. Stevens & Co., Inc., New York, NY) which has been impregnated or saturated with a mixture of glass frit comprising about 30% by weight glass frit with the balance including the diluent, preferably isopropanol, and any other additives. For Pyrex® frit and Vycor® frit containing mixtures, the mixture can comprise about 50% by volume glass frit, 1 to 2% by weight binding agent, and 1% by weight dispersant. For RGF containing mixtures, the mixture can comprise about 50% by volume RGF and 1% by weight binder. For Corning 7070 frit containing mixtures, the mixture can comprise about 55% by volume Corning 7070 and 1% by weight binder. The glass frit saturated glass cloth is then wrapped or molded around the preformed body and allowed to dry before additional layers of glass frit or pieces of glass cloth are applied over it as described above.

The glass frit(s) applied to the preformed body are preferably silica based and even more preferably silicon oxide based glass frits. Most preferably, the glass frits are selected from the following group: RGF, Pyrex® frit, Vycor® frit and/or Corning 7070 frit.

In a preferred embodiment, prior to the application of the first layer of glass frit a release coating is applied to the preformed body to ease removal of the encasing layer(s) of glass by preventing chemical and mechanical interactions between the preformed body and the encasing layer(s) during the HIP process. In this manner, the encasing layer(s) of glass can be easily removed from the final densified product by simply tapping the encasing glass with sufficient force to cause it to fracture and fall off the final densified product. The release coating generally contains boron nitride, carbon and a carrier fluid and is applied in the same manner as are the layers of glass frit. Preferably, the release coating is as described in U.S. Patent No. 4,987,105 (incorporated herein by reference). As with the solutions of glass frit that are applied to the preformed body, the release coating is allowed to dry before additional coatings are applied over it. Preferably, the release coating is dried in air at about 300°C for about 4 hours.

Once coated, the glass frit encased preformed body (with or without the release coating) is placed on a non-porous glass setter or plate made from a material such as, Al₂O₃, Pyrex® frit, Vycor® frit or quartz. In order to reduce the mechanical drag of the coated preform against the setter as the part compacts or shrinks and thereby prevent breach of the hermetic seal, a layer of glass frit such as that used to encase the preformed body may be placed between the setter and glass frit encased preformed body.

To affect hot isostatic pressing, the setter and glass frit encased preformed body are placed in a conventional high-pressure furnace which is then sealed and evacuated to a vacuum of about 200 milli-Torr to prevent trapping of gas in the preform and inhibiting consolidation. While under vacuum, the temperature of the furnace is first raised to the temperature at which at least a portion of the frit composition will vitrify and form a hermetic or gas-impermeable seal. The temperature is held at this point for a time sufficient to allow the formation of the hermetic seal. Once a hermetic seal has been formed, the pressure and temperature in the furnace are then raised to the final applicable processing parameters for the particular powered material being processed sufficient to provide an object at or near its maximum theoretical density or any other density that may be required for the particular object. Typical final processing parameters are 1700°C and 15 ksi held for one hour. Actual parameters, however, may vary widely depending on the materials to be processed as taught in the art. The elevated pressure necessary for hot isostatic pressing is provided by introducing a gas, preferably argon, helium or nitrogen, into the evacuated furnace.

After pressing is completed, the furnace is allowed to cool and depressurize to a point at which the final product encased or embedded within the vitrified layers of glass frit can be removed. The final densified product is then easily released from the vitrified encasing in which it is held as described previously.

### Example 1 - RGF Coating

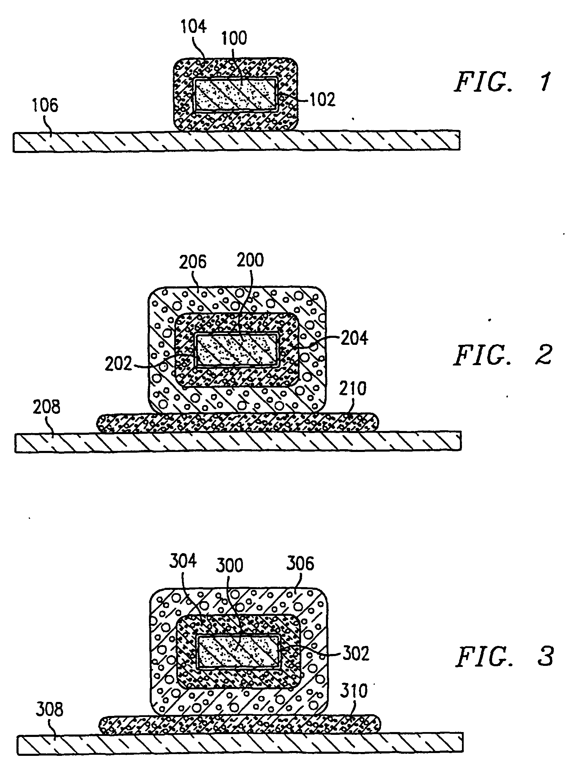

As illustrated in Fig. 1, a preformed body 100 made of nitroxyceram having a density of approximately 50% of its theoretical maximum was first coated with 0.16 g/cm² of a boron nitride-carbon containing release coating 102 which was then dried at 300°C for 4 hours in air. After the release coating 102 had dried, a coat of 0.15 g/cm² of reactive glass frit 104 was added by brushing with a mixture consisting of 2 grams of reactive glass frit per 1 gram of 10% by weight Aquazol solution in isopropanol. The glass frit coated preformed body 100 was then allowed to dry for 10 minutes at 100°C in air, placed on an Al₂O₃ setter 106, and finally placed into a high-pressure furnace which was then evacuated. Hot isostatic pressing was carried out in the following sequential steps: (a) the temperature was increased from a room temperature of 22.5°C to 1250°C under vacuum over a period of 90 minutes using a linear gradient, then 5 psi of gas pressure added and the resulting conditions were held for 10 minutes; (b) the temperature was increased from 1250°C to 1500°C over a period of 40 minutes using a linear gradient, then 50 psi of gas pressure added and the resulting conditions were held for 15 minutes; and (c) the temperature was increased from 1500°C to the final processing temperature of 1600°C and the pressure was increased to the final processing pressure of 15,000 ksi over a period of 30 minutes using a linear gradient, and then held for 0.5 hour. The finished product had a density of about 100% of the theoretical maximum.

### Example 2 - Pyrex® Coating

As illustrated in Fig. 2, a preformed body 200 made of nitroxyceram having a density of approximately 50% of its theoretical maximum was first coated with 0.15 g/cm² of a boron nitride-carbon containing release coating 202 which was then dried at 300°C for 4 hours in air. After the release coating 202 had dried, the preformed body 200 was coated or wrapped with a piece of Astro Quartz® cloth 204 saturated or impregnated with a mixture of 30% by weight Pyrex® frit in isopropanol. After drying for 10 minutes at 100°C in air, a layer of 0.2 g/cm² of Pyrex® frit 206 was applied over the piece of Astro Quartz® cloth 204 and allowed to dry for 10 minutes at 100°C in air. The Pyrex® frit layer 206 was applied by brushing with a mixture consisting of 2 grams of Pyrex® frit per 1 gram of 10% by weight Aquazol solution in isopropanol. The coated preformed body 200 was then placed on a Pyrex® setter 208 coated with approximately 0.05 g/cm² of Pyrex® frit 210 and placed into a high pressure furnace which was then evacuated. Hot isostatic pressing was carried out in the following sequential steps: (a) the temperature was increased from a room temperature of 22.5°C under vacuum to 1050°C over a period of 105 minutes using a linear gradient, then 5 psi of gas pressure added and the resulting conditions were held for 10 minutes; (b) the temperature was increased from 1050°C to 1250°C over a period of 20 minutes using a linear gradient, then 100 psi of gas pressure added and the resulting conditions were held for 15 minutes; and (c) the temperature was increased from 1250°C to the final processing temperature of 1600°C and the pressure was increased to the final processing pressure of 15 ksi over a period of 30 minutes using a linear gradient and held for 0.5 hour. The finished product had a density of about 100% of the theoretical maximum.

### Example 3 - RGF/Pyrex® Coating

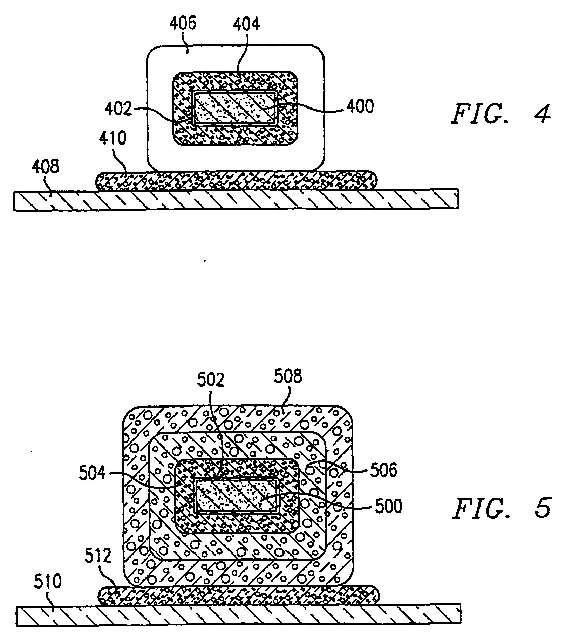

As illustrated in Fig. 3, a preformed body 300 made of nitroxyceram having a density of approximately 50% of its theoretical maximum was first coated with 0.13 g/cm² of a boron nitride-carbon containing release coating 302 which was dried at 300°C for 4 hours in air. After the release coating 302 had dried, the preformed body 300 was coated with 0.15 g/cm² of reactive glass frit 304 by brushing with a mixture consisting of 2 grams of reactive glass frit per 1 gram of 10% by weight Aquazol solution in isopropanol. After drying for 2 hours at 100°C in air, a second coating of 0.2 g/cm² of Pyrex® frit 306 was applied over the reactive glass frit coating 304 by brushing with a mixture consisting of 2 grams of reactive glass frit per 1 gram of 10% by weight Aquazol solution in isopropanol. This layer was allowed to dry for 10 hours at 100°C in air after which the coated preformed body 300 was placed on a Pyrex® setter 303 coated with approximately 0.05 g/cm² of Pyrex® frit 310 and placed into a high pressure furnace which was then evacuated. Hot isostatic pressing was carried out in the following sequential steps: (a) the temperature was increased from a room temperature of 22.5°C under vacuum to 1050°C over a period of 160 minutes using a linear gradient, then 5 psi of gas pressure added and the resulting conditions were held for 10 minutes; (b) the temperature was increased from 1050°C to 1500°C over a period of 40 minutes using a linear gradient, then 40 psi of gas pressure added and the resulting conditions were held for 15 minutes; and (c) the temperature was increased from 1500°C to the final processing temperature of 1600°C and the pressure was increased to the final processing pressure of 15 ksi over a period of 30 minutes using a linear gradient and held for 0.5 hour. The finished product had a density of about 100% of the theoretical maximum.

### Example 4 - Vycor®/Pyrex® Coating

As illustrated in Fig. 4, a preformed body 400 made of nitroxyceram having a density of approximately 50% of its theoretical maximum was first coated with 0.15 g/cm² of a boron nitride-carbon containing release coating 402 which was then dried at 300°C for 4 hours in air. After the release coating 402 had dried, the preformed body 400 was coated with 0.15 g/cm² of Vycor® 404 by brushing with a mixture consisting of 2 grams of Vycor® per 1 gram of 10% by weight Aquazol solution in isopropanol. After drying for 2 hours at 100°C in air, a second coating of 0.2 g/cm² of Pyrex® frit 406 was applied over the coating of Vycor® 404 by brushing with a mixture consisting of 2 grams of Pyrex® per 1 gram of 10% by weight Aquazol solution in isopropanol. This layer was allowed to dry for 10 hours at 100°C in air after which the coated preformed body 400 was placed on a Pyrex® setter 408 coated with approximately 0.05 g/cm² of Pyrex® frit 410 and placed into a high pressure furnace which was then evacuated. Hot isostatic pressing was carried out in the following sequential steps: (a) the temperature was increased from a room temperature of 22.5°C under vacuum to 1050°C over a period of 105 minutes using a linear gradient, then 2 psi of gas pressure added and the resulting conditions were held for 10 minutes; (b) the temperature was increased from 1050°C to 1500°C over a period of 45 minutes using a linear gradient, then 100 psi of gas pressure added and the resulting conditions were held for 15 minutes; and (c) the temperature was increased from 1500°C to the final processing temperature of 1600°C and the pressure was increased to the final processing pressure of 15,000 ksi over a period of 30 minutes using a linear gradient and held for 0.5 hour. The finished product had a density of about 100% of the theoretical maximum.

### Example 5 - RGF/Corning 7070 Coating

As illustrated in Fig. 5, a preformed body 500 made of nitroxyceram having a density of approximately 50% of its theoretical maximum was first coated with 0.13 g/cm² of a boron nitride-carbon containing release coating 502 which was then allowed to dry for 2 hours at 100°C in air. After the release coating 502 had dried, the preformed body 500 was coated with 0.15 g/cm² of reactive glass frit 504 by brushing with a mixture consisting of 2 grams of reactive glass frit per 1 gram of 10% by weight Aquazol solution in isopropanol and allowed to dry for 2 hours at 100°C in air. After drying, a piece of Astro Quartz® cloth 506 saturated with a mixture of 30% by weight Corning 7070 frit in isopropanol was placed over the first layer of reactive glass frit 504 and allowed to dry for 2 hours in 100°C in air. The piece of Astro-Quartz cloth 506 was then coated with 0.2 g/cm² of Corning 7070 508 by brushing with a mixture consisting of 2 grams of Corning 7070 per 1 gram of 10% by weight Aquazol solution in isopropanol. This layer was allowed to dry for 2 hours at 100°C in air after which the coated preformed body 500 was placed on a Pyrex® setter 510 coated with approximately 0.05% Corning 7070 frit 512 and placed into a high-pressure furnace which was then evacuated. Hot isostatic pressing was carried out in the following sequential steps: (a) the temperature was increased from a room temperature of 21.0°C under vacuum to 1050°C over a period of 105 minutes using an a linear gradient, then 5 psi of gas pressure added and the resulting conditions were held for 10 minutes; (b) the temperature was increased from 1050°C to 1500°C over a period of 45 minutes using a linear gradient, then 65 psi of gas pressure added and the resulting conditions were held for 15 minutes; and (c) the temperature was increased from 1500°C to the final processing temperature of 1600°C and the pressure was increased to the final processing pressure of 15 ksi over a period of 30 minutes using a linear gradient and held for 0.5 hour. The finished product had a density of about 100% of the theoretical maximum.

## Claims

1. A method for manufacturing an object from a preformed powder body by hot isostatic pressing wherein said method comprises the steps of:
(a) coating said preformed powder body with a layer of glass frit to form a frit coated preformed body;
(b) forming a gas-impermeable seal around the preformed powder body by subjecting said frit coated preformed powder body to an elevated temperature under vacuum sufficient to vitrify at least a portion said layer of glass frit; and
(c) subjecting the thus sealed preformed powder body to an elevated temperature and an elevated pressure sufficient to density said preformed powder body.

2. The method of claim 1 wherein said layer of glass frit is applied directly to said preformed body.

3. The method of claim 1 further comprising the step of applying a release coating to the preformed powder body prior to coating said preformed powder body with the layer of glass frit.

4. The method of claim 3 wherein said release coating is allowed to dry prior to coating said preformed powder body with said layer of glass frit.

5. The method of claim 1 further comprising the step of preforming a body of powder.

6. The method of claim 1 wherein said layer of glass frit is applied as a glass frit impregnated glass cloth.

7. The method of claim 1 wherein said layer of glass frit is allowed to dry prior to forming said gas-impermeable seal.

8. A method for manufacturing an object from a preformed powder body by hot isostatic pressing wherein said method comprises the steps of:
(a) coating said preformed powder body with a first layer of glass frit to form a first frit coated preformed powder body;
(b) coating said first frit coated preformed powder body with a second layer of glass frit to form a second frit coated preformed powder body;
(c) forming a gas-impermeable seal around said second frit coated preformed powder body by subjecting said second frit coated preformed powder body to an elevated temperature under vacuum sufficient to vitrify a portion of said first and/or second layers of glass frit; and
(d) subjecting said second frit coated preformed body to an elevated temperature and elevated pressure sufficient to densify said coated preformed powder body.

9. The method of claim 8 wherein said first layer of glass frit is applied directly to said preformed body and said second layer of glass frit is applied directly to said first layer of glass frit.

10. The method of claim 8 further comprising the step of applying a release coating to said preformed powder body prior to coating said preformed powder body with said first layer of glass frit.

11. The method of claim 10 wherein said release coating is allowed to dry prior to coating said preformed powder body with said first layer of glass frit.

12. The method of claim 8 further comprising the step of preforming a body of powder.

13. The method of claim 8 wherein said first layer of glass frit is applied as a glass frit impregnated glass cloth.

14. The method of claim 8 wherein said second layer of glass frit is applied as a glass frit impregnated glass cloth.

15. The method of claim 8 wherein a layer of glass frit is applied as a glass frit impregnated glass cloth.

16. The method of claim 8 wherein said first layer of glass frit is allowed to dry prior to coating said preformed powder body with said second layer of glass frit.

17. The method of claim 16 wherein said second layer of glass frit is allowed to dry prior to forming said gas-impermeable seal.
